# EUROPEAN PATENT APPLICATION

(11) **EP 3 594 491 A1**
(43) Date of publication of application: **15.01.2020**
(21) Application number: 18182521.7
(22) Date of filing: 09.07.2018
(51) Int. Cl.: F03D 7/02

(54) **METHOD TO OPERATE A WIND TURBINE ROTOR AND WIND TURBINE INSTALLATION ARRANGED FOR PERFORMING THE METHOD**

(71) Applicant: youWINenergy GmbH, 27568 Bremerhaven (DE)
(72) Inventor: ROHDEN, Rolf, 26607 Aurich (DE)
(74) Representative: Bird & Bird LLP

(57) **Abstract**

Method to operate a wind turbine rotor, the rotor being arranged to rotate about an axis A, the rotor having a first pitch drive and a first rotor blade, the first pitch drive being arranged for changing a first pitch angle β1 of the first rotor blade, the method comprising step:
Si changing the first pitch angle β1 while the first rotor blade rotates about axis A, particularly with an electronic control circuit arranged for instructing the first pitch drive.

## Description

The present invention relates to a method to operate a wind turbine rotor and to a wind turbine installation arranged for performing the method. The invention can be used advantageously with a new and an existing wind turbine installation.

A wind turbine installation usually comprises a wind turbine rotor with several rotor blades, the wind turbine rotor driving a generator also supported by a nacelle of a superordinate wind turbine installation. Applicant knows that the pitch angle of the rotor blade is changed during operation of the superordinate wind turbine installation.

### Problem and solution

It is an object of the invention to provide a method which allows to improve the output of the wind turbine installation.

This object is solved by a method to operate a wind turbine rotor according to claim 1 (first aspect) and by a wind turbine installation which is arranged for performing the method (second aspect). Preferred embodiments form the respective subject matter of the dependent claims.

The method according to the first aspect serves to operate a wind turbine rotor. The wind turbine rotor is arranged to rotate about an axis A (rotational axis A), has a first pitch drive and a first rotor blade. The first pitch drive is arranged for changing a first pitch angle of the first rotor blade. The method comprises the following step:
- S1: changing the first pitch angle β1 while the first rotor blade rotates about axis A, particularly with an electronic control circuit arranged for instructing the first pitch drive.

Generally, the wind velocity decreases towards the ground (wind velocity profile). The claimed method allows to adjust a chord of the first rotor blade while it rotates with the entire wind turbine rotor about axis A. A smaller wind velocity near the ground can be accounted for by decreasing the first pitch angle of the first rotor blade towards its bottommost position (6'o clock position, when seen along axis A). On the way towards its topmost position (12'o clock position), the first pitch angle of the first rotor blade can be increased. Both changes can be performed during a single turn of the first rotor blade about axis A. With the claimed method, the first pitch angle can be changed to depend on the angular position of the first rotor blade when seen along axis A. This can lead to an increased lift force of the first rotor blade, which drives a generator of the superordinate wind turbine installation, and thus to an improved output of the wind turbine installation. Further, the mechanical load on the rotor blades can be reduced.

Within the concept of the present invention, the rotor blade extends along a longitudinal axis B. The rotor blade may be twisted along its axis B, such that the direction of the chord at an axial position may vary along axis B. The rotor blade has an aerofoil cross section at a first axial position along axis B. An axial end of the rotor blade is mechanically connected with a rotor hub. The rotor hub and the first rotor blade form part of the wind turbine rotor. Further rotor blades, preferably one, two or three further rotor blades, can be mechanically connected with the rotor hub. The rotor hub is arranged to rotate about axis A and can be supported rotatably by the nacelle. A rotor of the generator can be mechanically connected with the rotor hub. When mechanically connected with the rotor hub, the rotor blade can rotate about axis D, which need not be perpendicular to axis A.

Within the concept of the present invention, the pitch angle β is measured between a chord or aerofoil zero lift line of the rotor blade and the (disk like or cone like) plane in which the rotor blade or its longitudinal axis rotates with the rotor hub about axis A (rotational plane). The first rotor blade's rotational plane need not be flat but can resemble a funnel or cone if the longitudinal axis of the first rotor blade is not perpendicular to axis A. The pitch angle β can depend on the rotor blade angle α (β(α)), axis A forming the vertex of the blade angle α.

### Preferred embodiments

Preferred embodiments explained in the following can be combined with each other, advantageously, unless stated otherwise. When explaining some of the steps or features, the blade angle α is given by clock positions, such as the 6 o'clock position which is the lowest angular position of the rotor blade where blade axis B may align with a vertical.

According to a preferred embodiment, step S1 is executed at least twice while the first rotor blade performs a full turn about axis A. Step S1 can be executed at least twice while the first rotor blade rotates from its bottommost position to its topmost position and/or at least twice while the first rotor blade rotates from its topmost position to its bottommost position. This can improve the output of the wind turbine installation.

In another preferred embodiment, step S1 includes decreasing the first pitch angle while the first rotor blade rotates downwards, particularly from a 12 o'clock position of the first rotor blade towards the 6 o'clock position of the first rotor blade seen along axis A. By this, the angle between the wind streaming about the first rotor blade and the chord can be reduced.

Step S1 of a further preferred embodiment includes increasing the first pitch angle while the first rotor blade rotates upwards, particularly from a 6 o'clock position of the first rotor blade towards the 12 o'clock position of the first rotor blade seen along axis A. By this, the angle between the wind streaming about the first rotor blade and the chord can be reduced.

A further preferred embodiment comprises the steps:
- S5: providing a first signal which is proportional to a first velocity v1 of wind streaming about the first rotor blade, by a first sensor arranged on a surface of the first rotor blade, to the electronic control circuit,
- S6: processing the first signal to obtain a first velocity vector *̅V̅*̅₁̅ of the wind streaming about the first rotor blade.

During step S5, also a second signal can be provided by a second sensor arranged on a surface of the first rotor blade. The second sensor is arranged to provide a second signal which is proportional to the first velocity v1 of wind streaming about the first rotor blade. The first and second sensor can form a first sensor pair. The first sensor can be arranged on the pressure side surface of the first rotor blade and the second sensor on the suction side surface, preferably at the same axial position of the first rotor blade along axis B. The first and the second sensor can be spaced from the rotor blade tip, preferably at the same distance from the blade tip measured along the chord. Preferably, the first sensor is arranged within a third of the blade length measured from the blade tip along the blade's axis B.

The signals of the first and second sensor can be evaluated to provide an indication of the angle of attack of the first rotor blade. The indicated angle of attack can form a basis for setting a target pitch angle of the first rotor blade.

Preferably, the first sensor is a pressure sensor which can be arranged to provide the first signal proportional to the pressure at the position of the first sensor. The first signal can be electrical, i.e. a voltage or a current. The first sensor can be a pitot tube or a piezoelectric transducer or a solid state pressure transducer or can have a membrane exposed to the wind. The second sensor can be similar to the first sensor.

During step S5, signals proportional to the first velocity v1 can be provided also with a second sensor pair. The second sensor pair can be arranged further away from the axial end of the first rotor blade which is arranged to be mechanically connected with the rotor hub, than the first sensor pair. The second sensor pair can be spaced further away from the blade tip than the first sensor pair but at the same axial position along axis B.

The electronic control circuit can determine the second "angle of attack" and second "target pitch angle" from the signal of second pair of sensors. The electronic control circuit then calculates the best pitch angle so as to get the maximum lift of blade considering all the inputs from the sensors. Then the electronic control circuit instructs the pitch drive for setting the pitch angle to the target pitch angle.

During step S6, the first velocity vector *̅V̅*̅₁̅ can be determined depending on the absolute value of the first signal. The first velocity vector *̅V̅*̅₁̅ can be determined also depending on the absolute value of the second signal and the difference between the first signal and the second signal. The first sensor pair can give signals which are indicative of the first velocity vector *̅V̅*̅₁̅. The signals of the first sensor pair and the differential of the two signals may be combined by the electronic control circuit to obtain both the wind velocity value and the direction of the wind of vector *̅V̅*̅₁̅. The electronic control circuit may interpret the vector *̅V̅*̅₁̅ with respect to the chord of aerofoil section at this location to obtain the effective "angle of attack" from vector *̅V̅*̅₁̅.

Step S1 of another preferred embodiment includes changing the first pitch angle at an average angular velocity in the range between 1 to 15°/s about the first rotor blade's longitudinal axis. Step S1 can be executed such that the average angular acceleration of the first rotor blade is limited to be less than 10°/s². This embodiment may allow to increase the output of the wind turbine installation. The angular acceleration can be set by the electronic control circuit such that a targed pitch angle is achieved as quickly as possible. To this end and after a new target pitch angle is set, the angular acceleration can be positive during a first time interval, can be "0" during a second time interval after the first time interval and can be negative during a third time interval after the second time interval.

In another preferred embodiment, the first rotor blade, or a support base of the hub, to which the first rotor blade is mechanically connected, has a mechanical stress sensor arranged for sensing the mechanical load imposed on the first rotor blade by the wind streaming about the first rotor blade. The mechanical stress sensor can be electrically connected with the electronic control circuit. The pitch angle β of the first rotor blade can be set to reduce the mechanical load imposed on the first rotor blade below an upper limit. Further, the pitch angle β of the first rotor blade can be set to limit the bending curve of the first rotor blade to avoid mechanical contact between the first rotor blade and the tower of the wind turbine installation.

According to a preferred embodiment, a second rotor blade is mechanically connected to a second pitch drive of said wind turbine rotor, wherein the second pitch drive is arranged for changing a second pitch angle β2 of the second rotor blade and is electrically connected with the electronic control circuit, wherein the second rotor blade and the first rotor blade form an angle of at least 60° or of 120°, the method comprising
- S9: changing the second pitch angle β2, while the second rotor blade rotates about axis A, particularly wherein the second pitch angle β2 is different from the first pitch angle β1 at a given point in time while the rotor rotates.

Generally, the wind velocity increases as the distance from the ground increases, at least up to a certain height. During operation of a wind turbine rotor having two or three rotor blades, the local velocity of the wind streaming towards one of the blades will depend on the respective rotor blade's angular position about axis A and the axial position along axis B. When the method of this embodiment is applied to the wind turbine rotor, there will be a first angular position of the wind turbine rotor about axis A, in which the first pitch angle is greater than the second pitch angle (first state). Further, there will be a second angular position, in which the first pitch angle is smaller than the second pitch angle (second state). These two states will occur during one turn of the rotor. This may offer the advantage that the exploitation of the wind streaming in can be improved.

In a further preferred embodiment, step S9 is executed at least twice while the second rotor blade performs a full turn about axis A. Step S9 can be executed at least twice while the second rotor blade rotates from its bottommost position to its topmost position and/or at least twice while the second rotor blade rotates from its topmost position to its bottommost position. This can improve the output of the wind turbine installation.

The second rotor blade can have a fourth sensor e arranged on the pressure side surface of the second rotor blade and a fifth sensor on the suction side surface, preferably at the same axial position of the second rotor blade along axis B'.

In another preferred embodiment, steps S1 and S9 are carried out simultaneously. Generally, the wind velocity increases as the distance from the ground increases, at least up to a certain height. This method can cause that the pitch angle of the first blade β1 differs from the pitch angle of the second blade β2 at a given point in time. This can improve the output of the wind turbine installation.

Step 9 of a further preferred embodiment includes decreasing the second pitch angle while the second rotor blade rotates downwards, particularly from a 12 o'clock position of the second rotor blade towards the 6 o'clock position of the second rotor blade seen along axis A.

According to a preferred embodiment, step S9 includes increasing the second pitch angle while the second rotor blade rotates upwards, particularly from a 6 o'clock position of the second rotor blade towards the 12 o'clock position of the second rotor blade seen along axis A.

Another preferred embodiment comprises the steps:
- S7: providing a fourth signal which is proportional to a second velocity v2 of wind streaming about the second rotor blade, with a fourth sensor arranged on a surface of the second rotor blade, to the electronic control circuit,
- S8: processing the second signal into a second velocity vector *̅V̅*̅₂̅ of the wind streaming about the second rotor blade.

During step S7, also a fifth signal can be provided with a fifth sensor arranged on a surface of the second rotor blade. The fifth sensor is arranged to provide the fifth signal which is proportional to the second velocity v2 of wind streaming about the second rotor blade. The fourth and fifth sensor can form a fourth sensor pair. The fourth sensor can be arranged on the pressure side surface of the second rotor blade and the fifth sensor on the suction side surface, preferably at the same axial position of the second rotor blade along axis B'. The fourth and fifth sensor can be spaced from the rotor blade tip, preferably at the same distance from the blade tip measured along the chord.

Preferably, the fourth sensor is a pressure sensor which can be arranged to provide the fourth signal proportional to the pressure at the position of the fourth sensor. The fourth sensor can be a pitot tube or a piezoelectric transducer or a solid state pressure transducer or can have a membrane exposed to the wind. The fourth signal can be electrical, i.e. a voltage or a current. The fifth sensor can be similar to the fourth sensor.

During step S7, signals proportional to the second velocity v2 can be provided also with a fifth sensor pair. The fifth sensor pair can be arranged further away from the axial end of the second rotor blade which is arranged to be mechanically connected with the rotor hub, than the fourth sensor pair. The fifth sensor pair can be spaced further away from the blade tip than the fourth sensor pair but at the same axial position along axis B'.

During step S8, the second velocity vector *̅V̅*̅₂̅ can be determined depending on the absolute value of the fourth signal. The second velocity vector *̅V̅*̅₂̅ can be determined depending also on the absolute value of the fifth signal and the difference between the fourth signal and the fifth signal.

In a further preferred embodiment, step S9 includes changing the second pitch angle at an angular velocity between 1 to 15°/s. Step S9 can be executed such that the angular acceleration about the second rotor blade's longitudinal axis is limited to be less than 10°/s².

During step S1, S5, S6, S8 and/or step S9, the wind velocity vectors *̅V̅*̅₁̅, or *̅V̅*̅₂̅ can be compared with the chord of the aerofoil section at the sensor location. The direction or orientation of the chord at this location with respect to the blade pitch angle, this is the angle of the chord at the blade root of the pitchable part of the blade, is already available in the reference or in a memory of the electronic control circuit. So, the angle of attack and its reference or correlation with the blade pitch angle can be computed in the electronic control circuit for each location of the sensor(s).

According to a preferred embodiment, the pitch angle β is reduced progressively while the respective rotor blade moves or rotates from its topmost or 12 o'clock position to its bottommost or 6 o'clock position. To this end, step S1 may be executed several times during a full rotation of the rotor blade. There may be three blade angles α1<α2<α3 between the 3 o'clock and 6 o'clock positions when the rotor blade rotates clockwise. Between blade angles α2 and α3, the absolute gradient |dβ(α)/dα| of the pitch angle function β(α) can be greater than between blade angles α1 and α2. The wind velocity and its Young's modulus may also limit the length of the rotor blade which must not hit the tower of the wind turbine installation near its 6 o'clock position. Changing the pitch angle as explained before may help to reduce the bending of the rotor blade particularly near its 6 o'clock position. This may provide a safety margin against the blade tip hitting the tower and/ or may allow to use a longer blade for increased exploitation of the wind streaming in. The safety margin may be used to reduce the angle between rotational axis A and an horizontal plane and/or to reduce the angle between blade axis B and a vertical for improved efficiency.

Between blade angles α4 and α5, the absolute gradient |dβ(α)/dα| of the pitch angle function β(α) can be greater than between blade angles α5 and α6, wherein α4<α5<α6 and these blade angles are between the 6 o'clock and 9 o'clock position. This may help to improve the exploitation of the wind.

In another preferred embodiment, the wind turbine rotor is supported rotatably by a nacelle, wherein the nacelle can be driven to rotate about an axis C by a yaw drive of the superordinate wind turbine installation, comprises step
- S10: changing the angular position of the nacelle about axis C (yaw angle), while the first rotor blade rotates about axis A, particularly with the electronic control circuit.
The angular position of the nacelle about axis C can be referred to as the yaw angle. The yaw angle can be measured between axis A and the velocity vector *̅V̅*̅₃̅ of the wind streaming about the nacelle. Preferably, step S10 will be executed, if the yaw angle is greater than 10°. Preferably, the yaw angle is set to less than 5° during step S10. This may help to improve the output of the wind turbine installation.

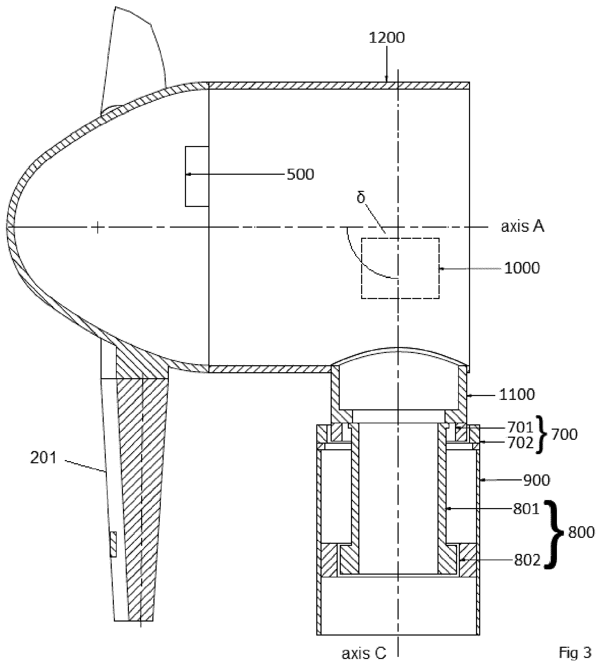

While axis C can be essentially vertical, axis A may not be arranged horizontally. Axis C and axis A can form an angle δ between 80° and 100°, wherein angle δ is measured as shown in fig. 3. Within the concept of the present invention, the section of axis C below axis A forms the first ray of angle δ and the section of axis A directed towards the wind forms the second ray. The angle δ and will increase to more than 90° if the rounded nose or tip of the rotor hub facing the wind is raised over the intersection of axes A and C. With greater angles δ, the tip of blade at its 6 o' clock position is further away from the tower. This may reduce the risk of the rotor blade hitting the tower during rotation. Further, the blade can be more flexible in structure and with lesser "prebend". However, when axis A is not arranged horizontally, the efficiency of the wind turbine may be smaller. The present invention, essentially involving active pitching, may offer the advantage that the angle δ may differ from 90° without losing efficiency. When the blade approaches its 6 o' clock position and bends towards the tower, the effective axis A approaches 90° with respect to axis C, effective axis A being perpendicular to local direction of rotor blade axis B near the first blade tip due to bending. Also, when the blade rotates towards its 12 o'clock position, its pitch angle is changed for the most advantageous position of maximum lift for blade. With this active pitching, the reduced efficiency caused by axis A not being essentially horizontal may be compensated.

According to a preferred embodiment, step S10 is carried out at least twice while the first rotor blade performs a full turn about axis A. This may help to improve the output of the wind turbine installation.

In a preferred embodiment, steps S1 and S10 are carried out simultaneously. Preferably, steps S1, S9 and S10 are carried out simultaneously. This can improve the output of the wind turbine installation.

A further preferred embodiment comprises changing the pitch angle of the first rotor blade and the yaw angle when the wind velocity of the wind streaming about the wind turbine installation exceeds an upper velocity limit. This can help to limit the mechanical loads on the first rotor blade and the wind turbine installation.

Another preferred embodiment of the method further comprises step
- S11: providing a third signal indicating and/or being proportional to a third velocity vector *̅V̅*̅₃̅ of wind streaming about the nacelle, with a third sensor arranged on the nacelle,
wherein step S10 of this embodiment includes changing the yaw angle between axis A and the third velocity vector *̅V̅*̅₃̅. Preferably step S10 will be executed, if the yaw angle is greater than 10°. Preferably, step S10 includes setting the yaw angle to less than 5°. This may help to improve the output of the wind turbine installation.

If axis A is not arranged horizontally, then a vertical plane through vector *̅V̅*̅₃̅ and another vertical plane having axis A can be compared during step S10 for an indication of the yaw angle. If these two planes form an angle of greater than 3°, then this angle can be reduced to less than 3°.

In another preferred embodiment, steps S1, S9, S10 and S11 are performed simultaneously. This may help to exploit the wind streaming in.

According to the second aspect, a wind turbine installation is arranged for performing the method of the first aspect or one of its preferred embodiments as explained before. The wind turbine installation comprises the wind turbine rotor, the first pitch drive being a direct drive and being arranged for changing the first pitch angle of the first rotor blade, the first rotor blade being mechanically connected with the rotor hub of the wind turbine rotor and the electronic control circuit which is arranged for instructing the first pitch drive.

A preferred embodiment comprises the first sensor which is arranged for providing the first signal being proportional to the first velocity v1 of wind streaming about the first rotor blade. The first sensor is arranged on a surface of the first rotor blade and is electrically connected with the electronic control circuit. The first sensor can be arranged on the pressure side surface of the first rotor blade.

Another preferred embodiment comprises the second sensor which is arranged for providing the second signal being proportional to the first velocity v1 of wind streaming about the first rotor blade. The second sensor is arranged on a surface of the first rotor blade and is electrically connected with the electronic control circuit. The second sensor can be arranged on the suction side surface of the first rotor blade. The first and second sensor can be arranged at the same axial position along axis B. The first and the second sensor can be spaced from the rotor blade tip, preferably at the same distance from the blade tip measured along the chord. The first and second sensor can form a first sensor pair.

Preferably, the first sensor is a pressure sensor which can be arranged to provide the first signal proportional to the pressure at the position of the first sensor. The fourth sensor can be a pitot tube or a piezoelectric transducer or a solid state pressure transducer or can have a membrane exposed to the wind. The first signal can be electrical, i.e. a voltage or a current. The second sensor can be similar to the first sensor.

Preferably, the wind turbine installation has a second sensor pair. The second sensor pair can be arranged further away from the axial end of the first rotor blade which is arranged to be mechanically connected with the rotor hub, than the first sensor pair. The second sensor pair can be spaced further away from the blade tip than the first sensor pair but at the same axial position along axis B.

A further preferred embodiment comprises a second rotor blade also mechanically connected with a second pitch drive of the wind turbine rotor. The second rotor blade can have a fourth sensor arranged on the pressure side surface of the second rotor blade and a fifth sensor on the suction side surface, preferably at the same axial position of the second rotor blade along axis B'. These sensors can be electrically connected with the electronic control circuit.

Generally, the wind velocity increases as the distance from the ground increases, at least up to a certain height. During operation of a wind turbine rotor having two or three rotor blades, the local velocity of the wind streaming towards one of the blades will depend on the respective rotor blade's angular position about axis A and the axial position along axis B. When the method of this embodiment is applied to the wind turbine rotor, there will be a first angular position of the wind turbine rotor about axis A, in which the first pitch angle is greater than the second pitch angle (first state). Further, there will be a second angular position, in which the first pitch angle is smaller than the second pitch angle (second state). These two states will occur during one turn of the rotor. This may offer the advantage that the exploitation of the wind streaming in can be improved.

If axis A is not arranged horizontally, particularly to maintain a least gap between a blade tip at the 6 o'clock position of the rotor blade and the tower, this embodiment can help to improve the efficiency of the wind turbine installation by adjusting the pitch angle of the blades while it rotates towards its 12 o'clock position.

The first pitch drive, also named first pitch drive mechanism, of a further preferred embodiment comprises a pitch motor, at least one pitch bearing and a shaft which is rotatably supported by the at least one pitch bearing and is arranged to be driven to rotate by the pitch motor. An end of the shaft is arranged to be mechanically connected with the pitch motor and an opposite end is arranged to be mechanically connected with the first rotor blade. Due to the at least one bearing, the shaft can rotate about an axis D. The shaft can have a cylindrical segment arranged to be supported by the at least one bearing and a tapered segment arranged to be mechanically connected with the first rotor blade. The tapered segment can have a cylindrical first end mechanically connected with the cylindrical segment. A second end of the tapered segment can have an aerofoil shape or cross section and can be arranged to be mechanically connected with the first rotor blade. The tapered segment and/or the cylindrical segment can be made with a metal, steel, resin, a fabric, fibres and/or rovings. The first pitch drive can have two bearings which are spaced apart from each other along axis D for absorbing forces on the first rotor blade and on the shaft particularly caused by the wind streaming about the wind turbine installation. The second pitch drive can be designed similar to the first pitch drive.

In a preferred embodiment, the first rotor blade has a root segment which is mechanically connected to the rotor hub and which cannot rotate about axis D. The root segment can support and hold the first pitch drive. The first rotor blade has a pitchable blade segment, which can be rotated about axis D by the first pitch drive to change the first pitch angle. The pitchable blade segment can be mechanically connected with an end of the first pitch drive, particularly with its shaft. The first rotor blade can have a winglet mechanically connected with the pitchable blade segment or with a third blade segment arranged between the pitchable blade segment and the winglet.

A preferred embodiment comprises a first support structure inside a cavity of the root segment, wherein the first support structure is arranged for supporting and for being mechanically connected with at least one bearing of a first pitch drive. The first support structure can be dimensioned to support and be mechanically connected with two bearings of the first pitch drive spaced apart from each other along axis A. The first support structure can be materially connected with a segment wall of the root segment. The root segment and/or the first support structure can be made with a metal, steel, resin, a fabric, fibres and/or rovings. This may increase the durability and/or mechanical stability of the root segment. Further, the root segment wall can help to protect the bearings from dirt and moisture.

Another preferred embodiment comprises a second support structure inside the cavity, wherein the second support structure is arranged for supporting and for being mechanically connected with a pitch motor of the first pitch drive. The second support structure can be arranged to absorb a counter torque occurring during operation of the pitch motor and/or arranged to fix a stator of the pitch motor. The second support structure and the root segment wall can be materially connected. The root segment and/or the second support structure can comprise a metal or steel. The root segment and/or the second support structure can comprise resin, a fabric, fibres and/or rovings. This may increase the durability and/or mechanical stability of the root segment. Further, the segment wall of the root segment can help to protect the pitch motor from dirt and moisture.

In another preferred embodiment, the root segment comprises an aerofoil first profile at a first axial position along axis A and an aerofoil second profile at a second axial position, wherein the first profile is different from the second profile. The first axial position may be closer to the second axial end of the root segment than the second axial position. This 30 may improve the exploitation of the wind streaming about the segmented rotor blade.

Preferably, a thickness T of the first profile perpendicular to a chord of the first profile is greater than a thickness of the second profile perpendicular to a chord of the second profile. Preferably, the thickness T of the first profile is greater than the outer diameter of the at least one bearing of the first pitch drive. This may help to provide sufficient space inside the root segment to accept and support the at least one bearing of the first pitch drive.

According to another preferred embodiment, the root segment has two of the first support structures which are spaced apart along axis A and a second support structure. The second support structure is positioned between the two first support structures. This may help to better absorb forces and torques by two spaced apart bearings during operation of the wind turbine installation.

According to another preferred embodiment, the wind turbine installation comprises
- the nacelle supporting the wind turbine rotor and arranged to rotate about an axis C,
- the yaw drive arranged for driving the nacelle to rotate about axis C and electrically connected with the electronic control circuit, wherein the yaw drive is a direct yaw drive,
- a third sensor arranged for providing a third signal indicating a third velocity vector *̅V̅*̅₃̅ of wind streaming about the nacelle, arranged on the nacelle, and electrically connected with the electronic control circuit.

The nacelle can be supported rotatably by a tower of the wind turbine installation. The angular position of the nacelle about axis C can be referred to as the yaw angle. The yaw drive can comprise a yaw bearing arranged between the tower and the nacelle, a yaw shaft supported by the yaw bearing, a yaw motor connected with and arranged to rotate the yaw shaft and a yaw base supporting the nacelle. The yaw base and the rotor of the yaw motor can be mechanically or materially connected

While axis C can be essentially vertical, axis A may not be arranged horizontally. Axis C and axis A can form an angle δ between 80° and 100°, wherein angle δ is measured as shown in fig. 3. Within the concept of the present invention, the section of axis C below axis A forms the first ray of angle δ and the section of axis A directed towards the wind forms the second ray. The angle δ and will increase to more than 90° if the rounded nose or tip of the rotor hub facing the wind is raised over the intersection of axes A and C. With greater angles δ, the tip of blade at its 6 o' clock position is further away from the tower. This may reduce the risk of the rotor blade hitting the tower during rotation. Further, the blade can be more flexible in structure and with lesser "prebend". However, when axis A is not arranged horizontally, the efficiency of the wind turbine may be smaller. The present invention, essentially involving active pitching, may offer the advantage that the angle δ may differ from 90° without losing efficiency. When the blade approaches its 6 o' clock position and bends towards the tower, the "effective axis A" approaches 90° with respect to axis C, effective axis A being perpendicular to local direction of rotor blade axis B near the first blade tip due to bending. Also, when the blade rotates towards its 12 o'clock position, its pitch angle is changed for the most advantageous position of maximum lift for blade. With this active pitching, the reduced efficiency caused by axis A not being essentially horizontal may be compensated.

According to a third aspect, a computer programme comprises instructions which, when the programme is executed by an electronic control circuit of a wind turbine installation, cause the electronic control circuit to carry out one of the methods as explained before. The computer programme can be stored on a data carrier or can be downloaded.

### Exemplary embodiments

Further advantages become apparent to the skilled person from the following exemplary embodiments.

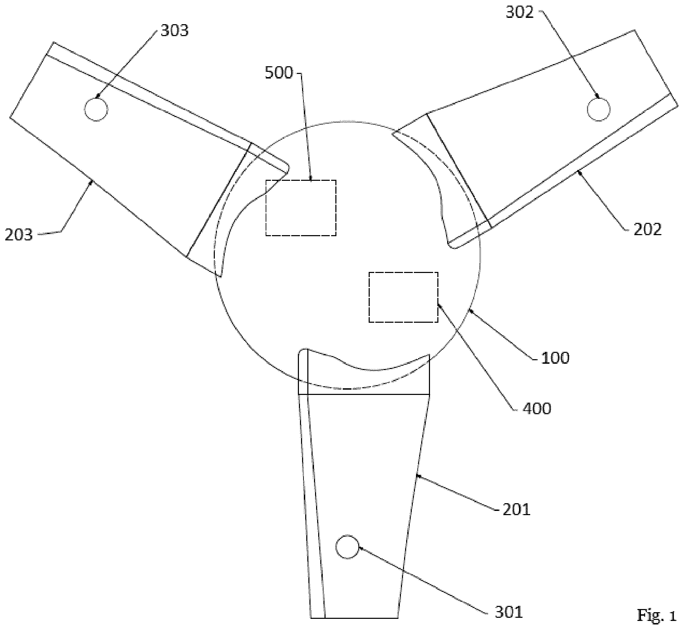

Fig. 1 shows a front view of the wind turbine rotor of an exemplary wind turbine installation. Three rotor blades 201, 202, 203 are mechanically connected the rotor hub 100 of the wind turbine rotor. The first sensor 301, 302, 303 of each of the rotor blades 201, 202, 203 is shown and is arranged on the pressure side surface of the respective rotor blade. Also, components 400, 500 of the electronic control circuit are shown. The first sensors are electrically connected with the electronic control circuit.

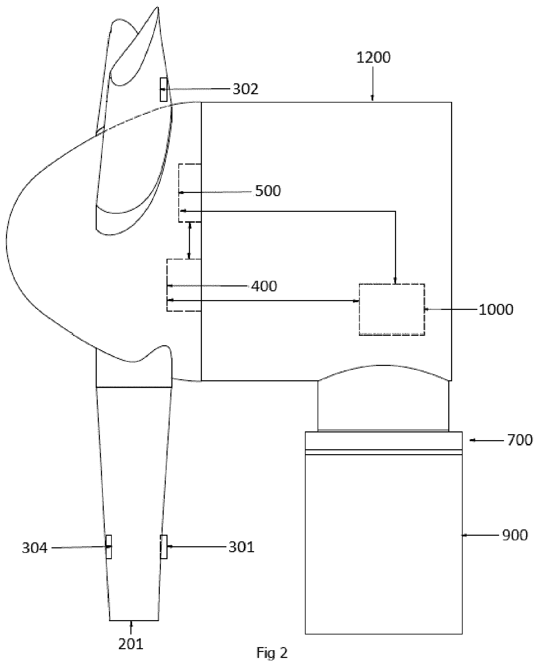

Fig. 2 shows a side view of the exemplary wind turbine installation of fig. 1. A yaw bearing 700 of the yaw drive is arranged between the nacelle 1200 and the tower 900 of the wind turbine installation. The first rotor blade 201 also comprises a second sensor 304 which is arranged on the suction side surface. The sensors 301, 304 are arranged at the same axial position of the first rotor blade and are electrically connected with the electronic control circuit 400, 500, 1000. A component 1000 of the electronic control circuit is arranged on the nacelle 1200.
Fig. 3 gives a sectional view of the exemplary wind turbine installation of figs. 1, 2 and shows further details. The tower 900 supports the stationary bearing ring 701 of the yaw bearing 700 inside which the rotatable bearing ring 702 is supported. The stator 802 of the yaw motor 800 is held by the tower 900. The yaw motor's rotor 801 is mechanically connected with the yaw base 1100 supporting the nacelle 1200. The yaw base is mechanically connected with the rotatable bearing ring 702. The yaw motor is electrically connected with the electronic control circuit, components 500 and 1000 of which are shown. Component 1000 is arranged on the nacelle.
Fig. 3 also shows how the angle δ between axes A and C is measured within the concept of the present invention. The section of axis C below axis A forms the first ray of angle δ and the section of axis A directed towards the wind forms the second ray. The angle δ and will increase to more than 90° if the rounded nose or tip of the rotor hub facing the wind is raised over the intersection of axes A and C.

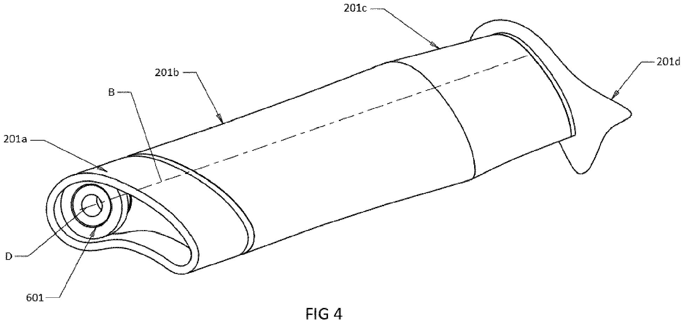

Fig. 4 shows an exemplary embodiment of the first rotor blade 201 having a root segment 201a, a pitchable blade segment 201b, a third blade segment 201c mechanically connected with the pitchable blade segment 201b and a winglet 201d mechanically connected with the third blade segment 201c. The root segment 201a holds a bearing 601 of the first pitch drive. The first rotor blade 201, particularly its root segment 201a, is arranged for being mechanically connected with the rotor hub of the exemplary wind turbine installation. A bearing 601 of the first pitch drive is visible through an open end of the root segment. The thickness of the root segment perpendicular to its chord. This exemplary first rotor blade can be used with the exemplary wind turbine installation of figs. 1-3.

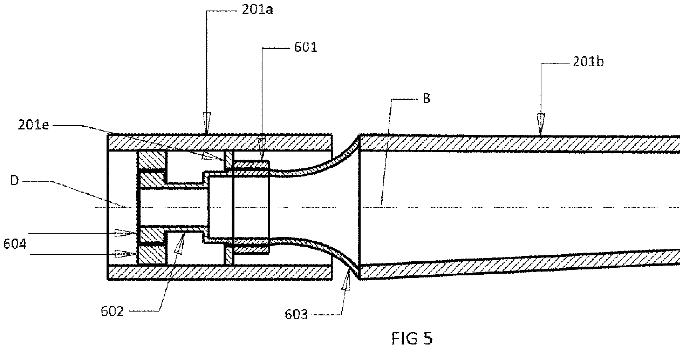

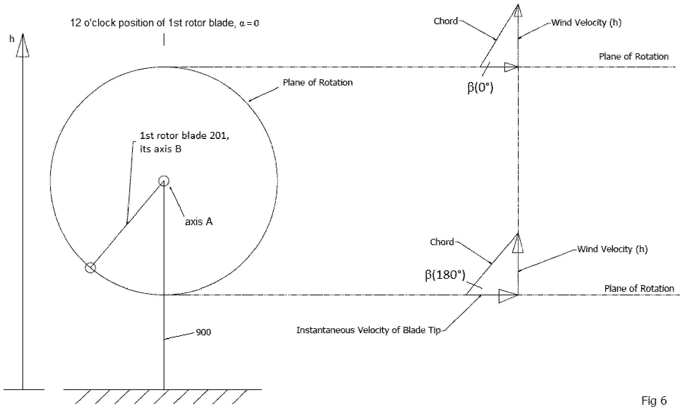

Fig. 5 shows a cross section through the exemplary first rotor blade of fig. 4. The root segment 201a has a support structure 201e for the bearing 601 of the first pitch drive 600. The first pitch drive has a shaft 602, 603 comprising a tapered segment 603 and an essentially cylindrical segment 602 and the latter is supported by bearing 601. The pitch motor 604 is mechanically or materially connected with an end of the cylindrical segment 602. The pitchable segment 201b is mechanically connected with the tapered segment 603. The tapered segment 603 is mechanically or materially connected with the cylindrical segment 602 or they can form a single body. The tapered segment 603 extends beyond the root segment 201a. The tapered segment 603 can be made with a resin, fibers and/or rovings. The tapered segment 603 can be made with a metal, steel, resin, a fabric, fibres and/or rovings.

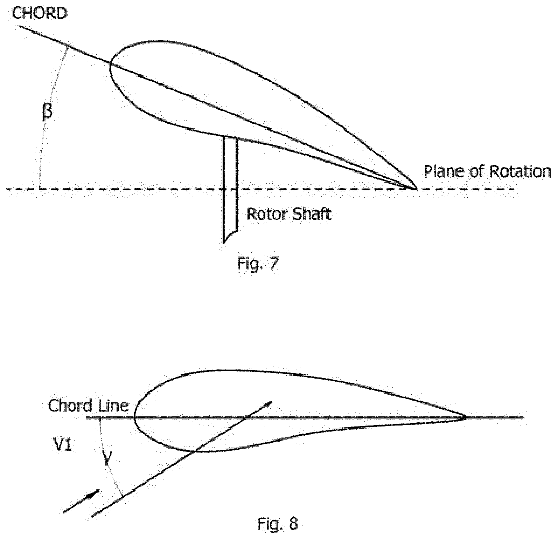

Fig. 7 shows that the first rotor blade's pitch angle measured between the chord of the first rotor blade and the plane of rotation or rotational plane of the rotor blade. At the 12 o'clock position of the first rotor blade, the wind velocity indicated by an arrow and the first rotor blade's pitch angle are greater than at the 6 o'clock position.
Fig. 8 shows the angle of attack γ between the chord and the wind velocity vector *̅V̅*̅₁̅.

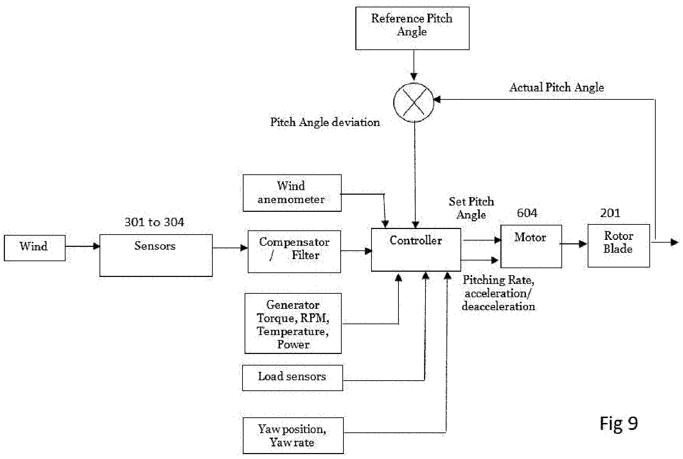

Fig. 9 shows a block diagram of an exemplary electronic control circuit of an exemplary wind turbine installation. As stated before, the first rotor blade 201 comprises two pressure sensors 301, 304. The first pressure sensor 301 is arranged on the pressure side surface of the first rotor blade and the other pressure sensor 304 on the suction side surface. The control circuit includes a control loop for the pitch angle of the rotor blade 201. The controller instructs the motor 604 of the pitch drive depending on the pitch angle deviation. The block diagram is simplified in that the second rotor blade, the second pitch motor and the second rotor blade's sensors are not shown. Further, the yaw motor and the control command for the yaw motor are not shown. Though the preceding figures show several independent components of the control circuit, some these can be combined and may form a single control unit. This exemplary electronic control circuit can be used with the exemplary wind turbine installation of figs. 1-3.

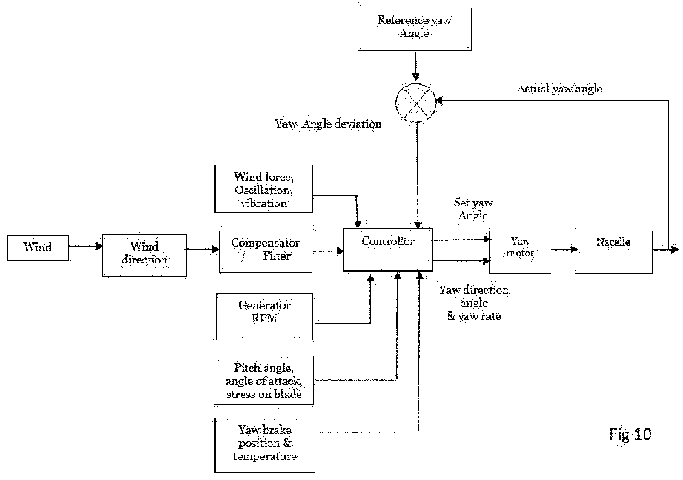

Fig. 10 shows other parts of the exemplary electronic control circuit of fig. 9 employed for setting or adjusting the yaw angle. A yaw angle control loop is part of the control circuit. The controller instructs the yaw motor depending on the pitch angle deviation to rotate the nacelle relative to the tower of the wind turbine installation.

As the wind is streaming about the first rotor blade, the first rotor blade's pressure sensors 301, 304 provide time dependent signals which are filtered (low pass filter). The wind turbine installation has further sensors:
- a wind anemometer, preferably arranged on the nacelle, sensors positioned and arranged for sensing the operating state of the generator,
- load sensors particularly arranged on the first rotor blade, on the pitch bearings, on the respective bearing supports, or on the pitch shaft or on the fastening elements,
- a sensor for the pitch angle of the first rotor blade, and
- a sensor for the yaw angle.

The signals provided by the sensors are received by an electronic control circuit. The electronic control circuit processes the received signals to send a control command to the pitch motor which changes or sets the pitch angle of the first rotor blade. The actual pitch angle is measured and compared with a desired of reference pitch angle, that is known to the electronic control circuit and can be stored in the electronic control circuit. The difference between the actual pitch angle and the reference pitch angle is fed to the electronic control circuit which can emit another control command to the pitch motor to reduce the difference.

The exemplary wind turbine installation can be operated such that pitching, yawing and rotation of the blades can occur simultaneously. This is possible by continuous communication between measurement and control system of the pitch mechanism, yaw mechanism and other wind turbine controllers. These multiple controllers can be separate or some can be combined together to accommodate several functions in one control unit. Thereby, the power generation can be improved and the stresses of the blades and subsequent components of the wind turbine can be reduced.

The wind velocity/pressure, wind direction and wind force are measured at surfaces of the rotor blades. These measurements are done by one of multiple sensor which are installed on the rotor blades. There are one or more measurement and control systems which continuously check the angles of attack for the corresponding rotor blade across the length of the individual blade. The measurement and control system or control circuit continuously gather the measurement data from the sensors and simultaneously check the position of individual rotor blade in terms of pitch angle and yawing position of the wind turbine installation. The control circuit analyses all these data and decides the pitch angle of individual rotor blade with information on the wind velocity, pressure, the actual angle of attack or pitch angle of the individual rotor blade, the yawing position of the machine, the unbending and untwisting of the blade, the speed of rotation of the blades on the central axis (rpm) and the maximum stress level that is allowed in the design of the wind turbine.

Simultaneously, the control circuit also decides the optimum combination of yawing position, blade angle position for each blade, and the rpm of the wind turbine rotor with information from sensors on the wind direction, wind velocity, angle of attack for rotor blades at multiple positions, stress level on rotor blades and other parts and rpm of the wind turbine installation. The control circuit also decides the rate of change of positions of rotor blade pitch angle, yawing and the rpm based on what is optimum rate of change of position within safe limits of stress. Further to that, the control circuit also decides the optimum torque of the wind turbine generator with information on various wind parameter and does the torque management of the wind turbine generator. The torque management of the generator is done such that it not only improves the power generation but also reduces the stress level of the wind turbine components. Based on the output from these various decisions of the control circuit, the pitch angle of the individual rotor blade, the yawing position of the wind turbine and the torque of the generator are controlled simultaneously.

The pitch angle of the rotor blade and the yawing position of the wind turbine are decided such that the maximum lift and minimum drag is approached. This results in the maximum torque achieved by the wind turbine rotor and thus maximum electrical power generation, while ensuring that the respective stress level of the wind turbine components does not go beyond the desired limit. When there is an emergency stoppage of the wind turbine installation, the control circuit also combines the pitching and yawing to pitch out the blades and yaw out the nacelle simultaneously so as to bring the machine in safe position in minimum possible time within safe stress levels on the components.

As shown in fig 1, the rotor blades are connected with rotor hub so the blades rotate the rotor hub and the rotor of the generator. The pitch angle of all the rotor blades at a particular point in time can be same or different depending upon the various parameters of the wind and the wind turbine. It is also possible that the pitch angle of the individual rotor blade is dynamically changed even during each and every rotation of the rotor blades based on the angle of attack control and the wind condition. This can be achieved by individual pitch drives which are direct pitch drives, which can be individually controlled by the control circuit and its components. This kind of arrangement further increases the generation from the wind turbine installation with better control on the stress levels in the individual rotor blade and on the mechanical components of the wind turbine installation.

The control circuit starts, stops and controls the rotation of the yaw motor depending upon the yawing requirement, and the rotation of the nacelle with reference to tower axis. As shown in figure 3, the rotor of the yaw motor is directly coupled with the yaw base of the wind turbine installation which is further connected with the entire nacelle of the wind turbine. It is also possible to connect the rotating shaft of the yaw motor directly with nacelle or other components of the nacelle. The yaw base is also connected with the rotating ring of the yaw bearing. The yaw base rests on the rotating ring of the yaw bearing. The stationary ring of the yaw motor is connected with the top of the tower. The stator of the yaw motor is also mounted at the top of the tower. The rotating shaft of the yaw motor directly rotates the entire nacelle during yawing of the wind turbine installation, the nacelle being supported on the yaw bearing. There is no other drive train mechanism between yaw motor and nacelle. The rotor of the yaw motor directly rotates the entire nacelle during yawing, which certainly reduce the transmission loss and reduce the stress level on wind turbine components.

Further, the control circuit also gives a command to individual pitch drives, which further carry out the pitch in and the pitch out of the respective rotor blade. The pitch angle (pitch in and pitch out) of the individual rotor blade is controlled and changed by individual direct pitch drives which eliminates transmission losses occurring in the drive trains of most of the common wind turbine installations

As shown in fig. 5, the pitch drive 600 is arranged inside the root segment 201a. The pitch drive includes at least one bearing 601, preferably a slew ring bearing, at least one rotating shaft 602, at least one stationary support structure 201e and at least one direct pitch drive / pitch motor 604. The rotating shaft can be connected with the rotating circular ring of the bearing 601 by fasteners or any other joining means which can take the loads coming at that particular joint. The other end of the rotating shaft 603 is connected with root of the pitchable blade segment 201b of the blade by fasteners or any other joining means which can take the loads coming at that particular joint. The rotating ring of the bearing 601 is also directly connected with the rotor of the direct pitch drive or pitch motor 604 by fasteners or any other joining means which can take the loads coming at that particular joint. The stator of the direct pitch drive or pitch motor 604 is directly mounted on the root segment 201a or it is mounted via any supporting means on the root segment 201a. Similarly, the stationary ring of the bearing 601 is connected with a second support structure of the root segment 201a. With this arrangement, the pitch drive or its pitch motor 604 directly rotates the rotor blade to pitch-in or pitch out via the bearing. Therefore, it is possible that the individual rotor blade can be pitched actively even during one rotation of the blade to suit the wind velocity. So even during single rotation of the blades, the pitch angle of the three blades can be changed continuously. And it is possible to have three different pitching angles for the three blades at the same time depending on the velocity at the blade position. Also during emergency pitching, the speed of pitching is faster.

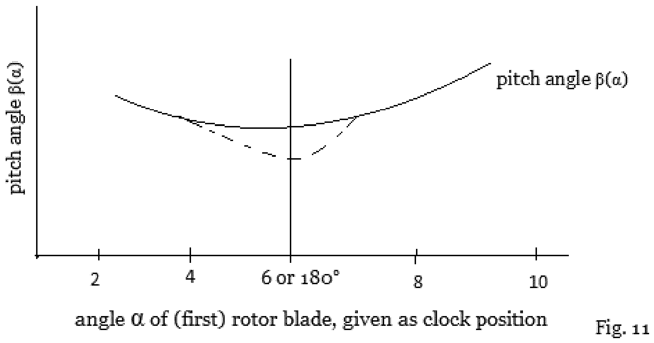

Fig. 11 shows two modes of operation and the blade angle is indicated by the clock position or time, e.g. 4 o'clock. The 6 o'clock position of the rotor blade aligns with the tower which is indicated by a vertical line. The graph given by the continuous line indicates how the pitch angle β decreases towards the rotor blade's 6 o'clock position and increases towards its 12 o'clock position (1^{st} mode).

The pitch angle β can be controlled to change according to the dashed section of the graph (2^{nd} mode). Between 4 o'clock and 5 o'clock, the absolute gradient |dβ(α)/dα| of the pitch angle function β(α) is not smaller than between 3 o'clock and 4 o'clock. This may help to reduce the bending of the rotor blade near its 6 o'clock position and/or may allow to use a longer rotor blade for improved exploitation of the wind streaming in.

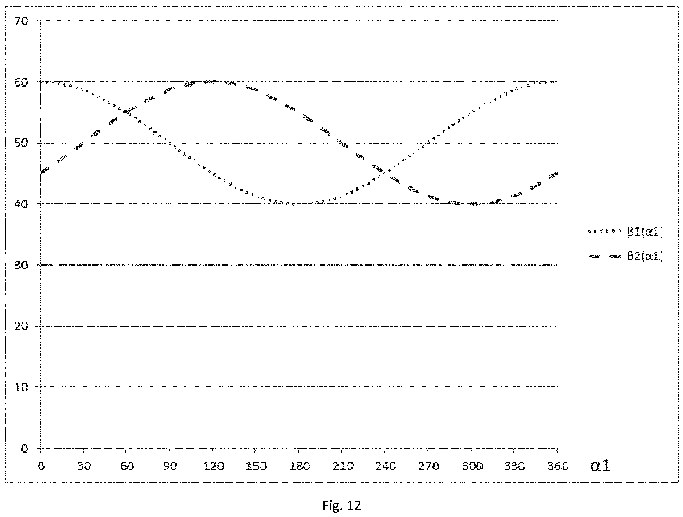

Fig. 12 shows how the first pitch angle β1(α1) (dotted line) of the first rotor blade of the exemplary wind turbine installation varies with its blade angle α1 (abscissa) during one full turn (360°) about axis A. The exemplary wind turbine installation of fig. 1-3 hast three blades. The axes B of the first and second rotor blade form an angle of 120°, so the second blade lags behind by 120°. Fig. 12 also shows how the second pitch angle β2 (dashed line) of the second rotor blade varies during one full turn of the wind turbine rotor. Here the second pitch angle β2 is shown as if depending on the first blade angle to avoid two different abscissae. The wind velocity profile, to which the respective blade pitch angle is adapted as shown in fig.3, is assumed to remain constant during the full turn of the wind turbine rotor.

At the topmost position of the first rotor blade, i.e. at 12 o'clock or α1=0°, the first pitch angle β1 at the blade tip of the first rotor blade has its maximum of about 60°. As the first rotor blade progresses towards its bottommost position (6 o'clock or α1=180°), the first pitch angle β1 decreases to 40° β1 at the blade tip of the first rotor blade in this exemplary wind turbine installation. After the bottommost position, the first pitch angle β1 at the blade tip of the first rotor blade increases again, as wind velocity essentially increases with distance from the ground. During the full turn of the wind turbine rotor, step S1 is performed several times.

The second rotor blade follows the first rotor blade with an angular distance of 120°. When the first rotor blade reaches α1=120° or 4 o'clock position, the second rotor blade is at its topmost position and the second pitch angle β2 is at its maximum. The second pitch angle β2 (dashed line) at the blade tip of the second rotor blade depends on its blade angle as explained with respect to the first rotor blade. During the full turn of the wind turbine rotor, step S9 is performed several times while step S1 is executed repeatedly. Except for the first blade angles 60° and 240°, the first pitch angle β1 at the blade tip of the first rotor blade is different from the second pitch angle β2 at the blade tip of the second rotor blade.

### Reference signs

100 wind turbine rotor hub
201 first rotor blade
201a, 201b, 201c segments of first rotor blade
202 second rotor blade
203 third rotor blade
301 first sensor
400 part of the electronic control circuit
500 part of the electronic control circuit
600 first pitch drive
700, 701, 702 yaw bearing, part of yaw drive
800, 801, 802 yaw motor, part of yaw drive
900 tower of wind turbine installation
1000 part of the electronic control circuit
1200 nacelle
α, α1 angle of (first) rotor blade
β, β1 (first) pitch angle
γ angle of attack of (first) rotor blade
δ angle between axes A and C
A rotational axis of wind turbine rotor, vertex for
B rotational axis of first rotor blade, vertex for β
C rotational axis of nacelle, vertex for angle γ
v1 first wind velocity
*̅V̅*̅₁̅ first wind velocity vector
*̅V̅*̅₃̅ third wind velocity vector

## Claims

1. Method to operate a wind turbine rotor, the rotor being arranged to rotate about an axis A, the rotor having a first pitch drive (600) and a first rotor blade (201), the first pitch drive being arranged for changing a first pitch angle of the first rotor blade, the method comprising
S1 changing the first pitch angle β1 while the first rotor blade rotates about axis A, particularly with an electronic control circuit (400, 500, 1000) arranged for instructing the first pitch drive.

2. Method according to claim 1, wherein step S1 is executed at least twice while the first rotor blade performs a full turn about axis A.

3. Method according to one of the preceding claims, wherein step S1 includes decreasing the first pitch angle while the first rotor blade rotates downwards, particularly from a 12 o'clock position of the first rotor blade seen along axis A.

4. Method according to one of the preceding claims, wherein step S1 includes increasing the first pitch angle while the first rotor blade rotates upwards, particularly from a 6 o'clock position of the first rotor blade seen along axis A.

5. Method according to one of the preceding claims, comprising the steps
S5 providing a first signal which is proportional to a first velocity v1 of wind streaming about the first rotor blade, with a first sensor (301) arranged on a surface of the first rotor blade, to the electronic control circuit,
S6 processing the first signal to obtain a first velocity vector *̅V̅*̅₁̅ of the wind streaming about the first rotor blade,
wherein step S1 includes changing the first pitch angle depending on the first velocity vector *̅V̅*̅₃̅₁̅.

6. Method according to one of the preceding claims, wherein step S1 includes changing the first pitch angle at an angular velocity between 1 and 15°/s.

7. Method according to one of the preceding claims, wherein a second rotor blade (202) is mechanically connected to a second pitch drive of said rotor, wherein the second pitch drive is arranged for changing a second pitch angle of the second rotor blade and is electrically connected with the electronic control circuit, wherein the second rotor blade and the first rotor blade form an angle of at least 60°, the method comprising
S9 changing the second pitch angle β2, while the second rotor blade rotates about axis A, particularly wherein the second pitch angle β2 is different from the first pitch angle β1 at a given point in time while the rotor rotates.

8. Method according to claim 7, wherein step S9 is executed at least twice while the second rotor blade performs a full turn about axis A.

9. Method according to one of claims 7 and 8, wherein steps S1 and S9 are carried out simultaneously.

10. Method according to one of claims 7 to 9, wherein step S9 includes decreasing the second pitch angle while the second rotor blade rotates downwards, particularly from a 12 o'clock position of the second rotor blade seen along axis A.

11. Method according to one of claims 7 to 10, wherein step S9 includes increasing the second pitch angle while the second rotor blade rotates upwards, particularly from a 6 o'clock position of the second rotor blade seen along axis A.

12. Method according to one of claims 7 to 11, wherein step S9 includes changing the second pitch angle at an angular velocity between 1 and 15°/s.

13. Method according to one of the preceding claims, wherein the absolute gradient |dβ(α)/dα| of the pitch angle function β(α) between blade angles α2 and α3 can be greater than between blade angles α1 and α2, wherein three blade angles α1<α2<α3 are arranged between the 3 o'clock and 6 o'clock positions of the rotor blade when rotating clockwise.

14. Method according to one of the preceding claims, wherein the wind turbine rotor is supported rotatably by a nacelle (1200), wherein the nacelle can be driven to rotate about an axis C by a yaw drive (700, 800) of a superordinate wind turbine installation, the method comprising
S10 changing the angular position of the nacelle about axis C, while the first rotor blade (201) rotates about axis A, particularly with the electronic control circuit.

15. Method according to claim 14, wherein step S10 is carried out at least twice while the first rotor blade performs a full turn about axis A.

16. Method according to one of claims 14 and 15, wherein steps S1 and S10 are carried out simultaneously.

17. Method according to one of claims 14 to 16, comprising
S11 providing a third signal being proportional to a third velocity vector *̅V̅*̅₃̅ of wind streaming about the nacelle, with a third sensor (weather vane) arranged on the nacelle,
wherein step S10 includes changing the yaw angle between axis A and the third velocity vector *̅V̅*̅₃̅.

18. Method according to claim 17, wherein step S10 includes setting the yaw angle to less than 5°.

19. Method according to one of claims 17 and 18, wherein steps S1, S9, S10 and S11 are performed simultaneously.

20. Wind turbine installation arranged for performing a method according to one of the preceding claims, the wind turbine installation comprising the wind turbine rotor, the first pitch drive (600) being a direct drive, the first rotor blade (201) and the electronic control circuit (400, 500, 1000) arranged for instructing the first pitch drive.

21. Wind turbine installation according to claim 20, comprising a first sensor (301) which is arranged for providing a first signal being proportional to a first velocity v1 of wind streaming about the first rotor blade (201), is arranged on a surface of the first rotor blade and is electrically connected with the electronic control circuit.

22. Wind turbine installation according to claim 21, comprising
a nacelle (1200) supporting the wind turbine rotor and arranged to rotate about an axis C,
a yaw drive (700, 800) arranged for driving the nacelle to rotate about axis C and electrically connected with the electronic control circuit, wherein the yaw drive is a direct yaw drive,
a third sensor arranged for providing a third signal indicating a third velocity vector *̅V̅*̅₃̅ of wind streaming about the nacelle, arranged on the nacelle, and electrically connected with the electronic control circuit.

23. A computer programme comprising instructions which, when the programme is executed by an electronic control circuit of a wind turbine installation, cause the electronic control circuit to carry out the method of one of claims 1 to 19.
